# EUROPEAN PATENT SPECIFICATION

(11) **EP 3 275 841 B1**
(45) Date of publication and mention of the grant of the patent: **16.09.2020**
(21) Application number: 17174420.4
(22) Date of filing: 05.06.2017
(51) Int. Cl.: C02F 1/00, C02F 1/32, E03B 3/28, B01D 36/02, B01D 39/16, B01D 39/06, C02F 9/00, C02F 1/28

(54) **PRIMARY FILTER AND STORAGE SYSTEM**
PRIMÄRER FILTER UND AUFBEWAHRUNGSSYSTEM
SYSTÈME DE STOCKAGE ET FILTRE PRIMAIRE

(30) Priority: 26.07.2016 CN 201620795707 U
(43) Date of publication of application: 31.01.2018
(73) Proprietor: Ng, Tat Yung, North Point (HK)
(72) Inventor: Ng, Tat Yung, North Point (HK)
(74) Representative: Cabinet Chaillot

(56) References cited:
- EP-A1- 3 275 520
- WO-A1-97/38272
- WO-A1-2012/009024
- WO-A2-2012/019059
- CA-A1- 2 614 643
- CN-A- 106 045 159
- CN-U- 201 952 317
- CN-U- 202 017 225
- CN-U- 202 347 580
- US-A1- 2010 292 844

## Description

### BACKGROUND OF THE INVENTION

### Technical Field

The invention relates to water treatment equipment, in particular to a primary filter and storage system.

### 2. Description of Related Art

Existing fresh water resources which can be easily utilized by humans are mainly from rivers, lakes and shallow groundwater; the fresh water resources are deficient due to large consumption, and clean water resources in places with abundant electricity and energy are also relatively deficient and need to be saved and protected due to serious pollution and extremely imbalanced regional distribution; water resources have already been precious resources for humans, and water resource problems even become a major strategy concerning sustainable development of the national economy and society, and lasting political stability.

In certain remote arid and distressed areas where clean water resources are extremely difficult to obtain and water resource shortages exist, it is hard to lay long delivery pipelines for long-distance supply of drinking water, or to transport drinking water back and forth through transportation facilities without considering transportation costs, or to mount large water quality optimization systems, and consequentially, the cost of safe drinking water becomes extremely high; besides the high drinking water cost, water quality changes or secondary pollution can be caused by long-distance delivery or transportation, and consequentially, water cannot be directly drunk by people safely.

Although the personal demand for drinking water of people in daily life is not large, the requirements for the sanitation, cleanliness, sterility and non-toxicity of the drinking water are high; drinkable pure water can be obtained through air purification and condensation, however, the pure water obtained simply through air purification and condensation still cannot reach the standard of high-quality drinking water and needs to be further optimized to reach the water quality standard of the high-quality drinking water.

CN 202 017 225 U, CN 201 952 317 U, WO 97/38272 A1, WO 2012/009024 A1, CN 202 347 580 U and US 2010/292844 A1 disclose a primary filter and storage system according to the preamble of claim 1.

### BRIEF SUMMARY OF THE INVENTION

For solving the technical problems, the invention provides a primary filter and storage system which can pre-treat water when pure water obtained through air purification and condensation is further optimized.

According to the technical scheme adopted by the invention for solving the technical problems, the primary filter and storage system comprises a power source, a water pump, a filter device, an ultraviolet sterilization device, a water storage device and a control circuit, wherein an inlet of the filter device is connected with a water source, and an outlet of the filter device is connected with the ultraviolet sterilization device; an outlet of the ultraviolet sterilization device is connected with the water storage device.

The filter device comprises a fiber mesh filter, a PP cotton filter, a quartz sand filter, a particle carbon filter and an active carbon filter.

The fiber mesh filter, the PP cotton filter, the quartz sand filter, the particle carbon filter and the active carbon filter are sequentially connected in series, the fiber mesh filter is connected with the water source through the water pump, and an outlet of the active carbon filter is connected with the ultraviolet sterilization device.

Preferably, the control circuit comprises a controller, the water storage device comprises a plurality of water containers, each water container comprises a water level alarm device, a water inlet electromagnetic valve and a water outlet electromagnetic valve, and the signal output end of each water level alarm device, the control end of each water inlet electromagnetic valve and the control end of each water outlet electromagnetic valve are all connected with the controller; the control end of a water pump driving circuit is connected with the controller.

Preferably, the power source is a solar power source.

The primary filter and storage system of the invention can be used for primary optimization and storage of pure water obtained through air purification and condensation, and thus the pure water can be further optimized by the next-stage water purification system conveniently to reach the standard of optimal drinking water.

### BRIEF DESCRIPTION OF THE SEVERAL VIEWS OF THE DRAWINGS

A further detailed description of the invention is given with the accompanying drawing and the specific execution mode as follows.

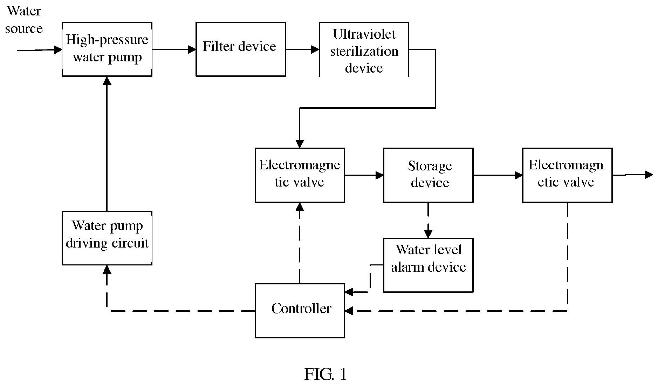

FIG. 1 is a chart of a primary filter and storage system of an embodiment of the invention.

### DETAILED DESCRIPTION OF THE INVENTION

FIG. 1 shows the structure of a primary filter and storage system of an embodiment of the invention, and the primary filter and storage system comprises a power source, a high-pressure water pump, a filter device, an ultraviolet sterilization device, a water storage device and a control circuit, wherein an inlet of the filter device is connected with a water source, and an outlet of the filter device is connected with the ultraviolet sterilization device; an outlet of the ultraviolet sterilization device is connected with the water storage device.

Wherein, the filter device comprises a fiber mesh filter, a PP cotton filter, a quartz sand filter, a particle carbon filter and an active carbon filter. The fiber mesh filter, the PP cotton filter, the quartz sand filter, the particle carbon filter and the active carbon filter are sequentially connected in series, the fiber mesh filter is connected with the water source through the high-pressure water pump, and an outlet of the active carbon filter is connected with the ultraviolet sterilization device.

The control circuit comprises a controller, the water storage device comprises a plurality of water containers, each water container comprises a water level alarm device, a water inlet electromagnetic valve and a water outlet electromagnetic valve, and the signal output end of each water level alarm device, the control end of each water inlet electromagnetic valve and the control end of each water outlet electromagnetic valve are all connected with the controller; the control end of a high-pressure water pump driving circuit is connected with the controller.

In the embodiment, the power source is a solar power source.

The primary filter and storage system of the embodiment of the invention can collect the water source of a plurality of air purification and condensation water-production systems, for avoiding the influence on the water-production quantity and the increase of the size of a machine body, only simple filtration is conducted by the water-production systems, and the primary filter and storage system is responsible for major water source filtration and purification after water-production; all water source filtration, purification and sterilization work of the system is promoted through the high-pressure water pump, the operating condition and information of the system are monitored through the controller of the control circuit of the system in each procedure, and the operating information, the system working condition and alarm information are summarized and synchronously transmitted to a master control system of a central control room through the controller. In addition, the primary filter and storage system is characterized in that a solar power supply system is used for providing the required power source, so that the environment is protected, and energy is saved.

According to the embodiment of the invention, the water source is purified and odors in the water are absorbed when the water source passes through the filter device, the purified water passes through a stainless steel high-energy ultraviolet sterilization system before entering the water storage device, and the water source enters the water storage device after being further optimized.

According to the embodiment of the invention, the water storage device is composed of a plurality of water tanks, the water inlet and water outlet of each water tank is controlled by the control system through a water level alarm device and electromagnetic valves, the storage quantity and the using quantity are also monitored, and when the storage quantity is too large, the upstream water-production system can be informed through a monitoring system of the central control room to stop distributing water, so that water source waste is avoided, and equipment loss is reduced.

The primary filter and storage system of the embodiment of the invention can be used for primary optimization and storage of pure water obtained through air purification and condensation, and thus the pure water can be further optimized by the next-stage water purification system conveniently to reach the standard of the optimal drinking water. Meanwhile, the primary filter and storage system can reduce the load of the next-stage water purification system, the service life of an RO mold is prolonged, flushing and sewage discharge of the RO mold are reduced, and emission is reduced while energy is saved.

## Claims

1. A primary filter and storage system, comprising a power source, a water pump, a filter device and a control circuit, said system further comprising an ultraviolet sterilization device and a water storage device, wherein an inlet of the filter device is connected with a water source, and an outlet of the filter device is connected with the ultraviolet sterilization device; an outlet of the ultraviolet sterilization device is connected with the water storage device,
the primary filter and storage system being **characterized in that** the filter device comprises a fiber mesh filter, a PP cotton filter, a quartz sand filter, a particle carbon filter and an active carbon filter, wherein the fiber mesh filter, the PP cotton filter, the quartz sand filter, the particle carbon filter and the active carbon filter are sequentially connected in series, the fiber mesh filter is connected with the water source through the water pump, and an outlet of the active carbon filter is connected with the ultraviolet sterilization device.

2. The primary filter and storage system according to Claim 1, **characterized in that** the control circuit comprises a controller, the water storage device comprises a plurality of water containers, each water container comprises a water level alarm device, a water inlet electromagnetic valve and a water outlet electromagnetic valve, and the signal output end of each water level alarm device, the control end of each water inlet electromagnetic valve and the control end of each water outlet electromagnetic valve are all connected with the controller; the control end of a water pump driving circuit is connected with the controller.

3. The primary filter and storage system according to Claim 1, **characterized in that** the power source is a solar power source.

## Patentansprüche

1. Primärfilter- und Speichersystem, umfassend eine Leistungsquelle, eines Wasserpumpe, eine Filtervorrichtung und eine Steuerschaltung, wobei das System ferner eine Ultraviolett-Sterilisationsvorrichtung und eine Wasserspeichervorrichtung umfasst, wobei ein Einlass der Filtervorrichtung mit einer Wasserquelle verbunden ist, und ein Auslass der Filtervorrichtung mit der Ultraviolett-Sterilisationsvorrichtung verbunden ist; wobei ein Auslass der Ultraviolett-Sterilisationsvorrichtung mit der Wasserspeichervorrichtung verbunden ist,
wobei das Primärfilter- und Speichersystem **dadurch gekennzeichnet ist, dass** die Filtervorrichtung ein Fasernetzfilter, ein PP-Baumwollfilter, ein Quarzsandfilter, ein Partikelkohlefilter und ein Aktivkohlefilter umfasst. wobei das Fasernetzfilter, das PP-Baumwollfilter, das Quarzsandfilter, das Partikelkohlefilter und das Aktivkohlefilter nacheinander in Reihe geschaltet sind, das Fasernetzfilter durch die Wasserpumpe mit der Wasserquelle verbunden ist, und ein Auslass des Aktivkohlefilters mit der Ultraviolett-Sterilisationsvorrichtung verbunden ist.

2. Primärfilter- und Speichersystem nach Anspruch 1, **dadurch gekennzeichnet, dass** die Steuerschaltung eine Steuerung umfasst, die Wasserspeichervorrichtung eine Mehrzahl von Wasserbehältern umfasst, jeder Wasserbehälter eine Wasserstandsalarmvorrichtung, ein elektromagnetisches Wassereinlassventil und ein elektromagnetisches Wasserauslassventil umfasst, und das Signalausgabeende jeder Wasserstandsalarmvorrichtung, das Steuer-Ende jedes elektromagnetischen Wassereinlassventils und das Steuer-Ende jedes elektromagnetischen Wasserauslassventils allesamt mit der Steuerung verbunden sind; wobei das Steuer-Ende einer Wasserpumpentreiberschaltung mit der Steuerung verbunden ist.

3. Primärfilter- und Speichersystem nach Anspruch 1, **dadurch gekennzeichnet, dass** die Leistungsquelle eine Sonnenenergiequelle ist.

## Revendications

1. Système de stockage et filtre primaire, comprenant une source d'alimentation, une pompe à eau, un dispositif de filtre et un circuit de commande, ledit système comprenant en outre un dispositif de stérilisation aux ultraviolets et un dispositif de stockage d'eau, une entrée du dispositif de filtre étant reliée à une source d'eau, et une sortie du dispositif de filtre étant reliée au dispositif de stérilisation aux ultraviolets ; une sortie du dispositif de stérilisation aux ultraviolets étant reliée au dispositif de stockage d'eau,
le système de stockage et filtre primaire étant **caractérisé par le fait que** le dispositif de filtre comprend un filtre à tamis fibreux, un filtre à coton PP, un filtre à sable de quartz, un filtre à particules au charbon et un filtre à charbon actif, le filtre à tamis fibreux, le filtre à coton PP, le filtre à sable de quartz, le filtre à particules au charbon et le filtre à charbon actif étant reliés de manière séquentielle en série, le filtre à tamis fibreux étant relié à la source d'eau par l'intermédiaire de la pompe à eau, et une sortie du filtre à charbon actif étant reliée au dispositif de stérilisation aux ultraviolets.

2. Système de stockage et filtre primaire selon la revendication 1, **caractérisé par le fait que** le circuit de commande comprend un dispositif de commande, le dispositif de stockage d'eau comprend une pluralité de récipients d'eau, chaque récipient d'eau comprend un dispositif d'alarme de niveau d'eau, une vanne électromagnétique d'entrée d'eau et une vanne électromagnétique de sortie d'eau, et l'extrémité de sortie de signal de chaque dispositif d'alarme de niveau d'eau, l'extrémité de commande de chaque vanne électromagnétique d'entrée d'eau et l'extrémité de commande de chaque vanne électromagnétique de sortie d'eau sont toutes reliées au dispositif de commande ; l'extrémité de commande d'un circuit de pilotage de pompe à eau est reliée au dispositif de commande.

3. Système de stockage et filtre primaire selon la revendication 1, **caractérisé par le fait que** la source d'alimentation est une source d'alimentation solaire.
